Europäisches Patentamt

European Patent Office

Office européen des brevets

(19)

(11) EP 0 754 317 B1

(12) **EUROPÄISCHE PATENTSCHRIFT**

(45) Veröffentlichungstag und Bekanntmachung des Hinweises auf die Patenterteilung:
**23.09.1998 Patentblatt 1998/39**

(21) Anmeldenummer: **95907556.5**

(22) Anmeldetag: **03.02.1995**

(51) Int Cl.6: **G05B 19/404**

(86) Internationale Anmeldenummer:
**PCT/DE95/00146**

(87) Internationale Veröffentlichungsnummer:
**WO 95/27930 (19.10.1995 Gazette 1995/45)**

(54) **EINRICHTUNG ZUR KOMPENSATION VON NICHTLINEARITÄTEN AN MASCHINENACHSEN**

DEVICE DESIGNED TO COMPENSATE FOR NON-LINEARITY OF MACHINE SHAFTS

SYSTEME PERMETTANT DE COMPENSER LA NON-LINEARITE D'ARBRES DE MACHINES

(84) Benannte Vertragsstaaten:
**AT CH DE ES FR GB IT LI SE**

(30) Priorität: **08.04.1994 DE 4411989**

(43) Veröffentlichungstag der Anmeldung:
**22.01.1997 Patentblatt 1997/04**

(73) Patentinhaber: **SIEMENS AKTIENGESELLSCHAFT**
**80333 München (DE)**

(72) Erfinder:
• **ERKENS, Friedrich**
**D-90768 Fürth (DE)**
• **MAETSCHKE, Stefan**
**D-90559 Burgthann (DE)**
• **QUASCHNER, Bernd**
**D-91056 Möhrendorf (DE)**

(56) Entgegenhaltungen:
**EP-A- 0 423 357       EP-A- 0 460 224**
**WO-A-90/07738**

• **IAS'93. CONFERENCE RECORD OF THE 1993 IEEE INDUSTRY APPLICATIONS CONFERENCE TWENTY-EIGHTH IAS ANNUAL MEETING (CAT. NO.93CH3366-2), PROCEEDINGS OF IEEE INDUSTRY APPLICATION SOCIETY ANNUAL MEETING, TORONTO, ONTARIO, CANADA, 2-8 OCTOBER 1993 , Bd. 3, 1993, NEW YORK, NY, USA, IEEE, USA, Seiten 2027-2034, SEIDL D. R. ET AL. 'Neural network compensation of gear backlash hysteresis in position-controlled mechanisms'**

**Beschreibung**

Die Erfindung bezieht sich auf ein Verfahren zur numerischen Steuerung von Maschinen mit mehreren Achsen, insbesondere von Werkzeugmaschinen und Robotern, mit Kompensation von beim Reversieren der Achsen auftretenden Ungenauigkeiten.

Bei modernen industriellen Steuerungen zum Einsatz beispielsweise bei Werkzeugmaschinen oder Robotern treten beim Reversieren einer Maschinenachse häufig Bahnungenauigkeiten auf, die im wesentlichen durch wechselnde Reibungsverhältnisse sowie Lose und Torsionseffekte verursacht werden. Wird eine Achse von einer negativen auf eine positive Geschwindigkeit beschleunigt oder umgekehrt, so kann die Bewegung beim Nulldurchgang der Geschwindigkeit wegen der wechselnden Reibverhältnisse und Nichtlinearitäten der Mechanik gestört werden. Im Falle mehrerer miteinander interpolierender Achsen führt dieses Verhalten zu Konturfehlern. Diese Tatsache wird besonders bei Kreiskonturen deutlich, wo sich beim Quadrantenübergang eine Achse mit der maximalen Bahngeschwindigkeit bewegt, während die zweite Achse das Vorzeichen ihrer Geschwindigkeit ändert. Bei solchen Kippunkten mit Richtungswechsel oder aber auch einem Anfahren aus dem Stillstand bewirken Reibung, Loseeffekte und Torsionseffekte häufig ein Abweichen der tatsächlichen Drehzahlistwerte von den Drehzahlsollwerten. Bei sogenannten Loseeffekten, die sich z.B. im Laufe der Betriebszeit in Form eines Spieles zwischen den Zahnrädern eines angeschlossenen Getriebes eingestellt haben, kommt es gerade in Kippunkten zu einem hystereseartigen Verlauf der Maschinenachsen. Als Folge davon treten daher häufig Konturfehler am zu fertigenden Werkstück auf. Da solche auftretenden Konturungenauigkeiten erwünschtermaßen vermieden werden sollen, ist man bestrebt, ein Verfahren zur numerischen Steuerung von Maschinen so auszugestalten, daß solche beim Reversieren der Maschinenachsen auftretende Bahnungenauigkeiten aufgrund wechselnder Reibungsverhältnisse, Loseeffekte und Torsionseffekten mit Hilfe einer Reibvorsteuerung durch eine geeignete Korrektur des Drehzahlsollwertes kompensiert werden können.

Es ist bekannt, daß herkömmliche Verfahren zur numerischen Steuerung von Maschinen zur Losekompensation in der Regel von Schlittenantrieben bei einem Vorzeichenwechsel in einer Achse lediglich einen konstanten Betrag, die Lose, auf den zu verfahrenden Weg addieren bzw. subtrahieren. Dies geschieht zumeist einmalig im Rechnungsvorlauf für jeden einzelnen Steuerungsdatensatz (vgl. dazu Weck, M.: Werkzeugmaschinen Bd. 3, Automatisierung und Steuerungstechnik, 3. Aufl., VDI-Verlag 1989, S. 183f.). Damit ist demnach keine Einbindung der Fehlerkompensation in das Steuerungsverfahren verbunden. Da die beim Reversieren der Maschinenachsen auftretenden Bahnungenauigkeiten in der Regel auch beschleunigungsunabhängig sind, wird durch die Addition bzw. Subtraktion eines einmaligen konstanten Betrages bei sich verändernden Beschleunigungsverhältnissen keine ausreichende Kompensation der Ungenauigkeiten gewährleistet. Erforderlich ist vielmehr ein Verfahren, welches in den Hauptlauf der numerischen Steuerung eingebunden wird und in Echtzeit auftretende Bahnungenauigkeiten ausregelt.

Aus der WO 90/07738 ist ein Verfahren zur Korrektur von Nichtlinearitäten bekannt, in dem Korrektursignale vorgesehen sind, wobei jedoch sich ändernde Beschleunigungsverhältnisse der Maschine für die Ermittlung solcher Korrektursignale nicht vorgesehen sind. Hinzu kommt, daß solche Korrektursignale nach einem festen Schema vorgegeben sind und diese nicht für die jeweilig eingesetzte Maschine optimiert werden können. Weiterhin ist umfangreicher Schaltungsaufwand zur Ermittlung eines geeigneten Aufschaltpunktes für solche Korrektursignale notwendig. Aus der Veröffentlichung IAS'93, Conference Record of the 1993 IEEE Industry Applications Conference, Twenty-eight IAS Annual Meeting (Cat No. 93CH3366-2), Proceedings of IEEE Industry application society annual meeting, Toronto, Ontario, Canada, 2-8 October 1993, Bd.3, 1993, Seiten 2027-2034, Seidl D.R. et al. ist der Einsatz eines selbstlernenden wissensbasierten Systems zur Losekompensation bekannt, welches jedoch nicht darüber hinaus zur Kompensation anderer Nichtlinearitäten wie beispielsweise wechselnder Reibungsverhältnisse und Torsionseffekte eingesetzt werden kann. Hinzu kommt, daß die Loseeffekte in Form von Kennlinien nachgebildet werden, was sehr berechnungsaufwendig ist, da dazu jeweils die kompletten Kennlinienverläufe ermittelt werden müssen. Dies ist für eine Kompensation beliebiger Nichtlinearitäten in Echtzeit nicht in der erforderlichen Genauigkeit und mit der erforderlichen Reaktionszeit durchführbar.

Bei obengenanntem standardgemäß eingesetzten Verfahren werden lediglich Bahnungenauigkeiten aufgrund von Loseeffekten berücksichtigt. Torsionseffekte sowie wechselnde Reibungsverhältnisse, welche einen sich über die Zeit ändernden Korrekturverlauf erfordern, werden nicht berücksichtigt. Desweiteren werden stets Nichtlinearitäten in Form von Kennlinien selbst nachgebildet, was sehr rechenaufwendig ist und darüber hinaus unterschiedliche Beschleunigungszustände der jeweiligen Maschine nicht berücksichtigt.

Der Erfindung liegt daher die Aufgabe zugrunde, ein Verfahren zur numerischen Steuerung von Maschinen mit mehreren Achsen, insbesondere von Werkzeugmaschinen oder Robotern, mit Kompensation von beim Reversieren der Achsen auftretenden Ungenauigkeiten so auszugestalten, daß neben durch Loseeffekte bedingten Bahnungenauigkeiten auch solche durch wechselnde Reibungsverhältnisse sowie Torsionseffekte verursachte in einem gemeinsamen Steuerungsverfahren berücksichtigt werden.

Darüber hinaus soll die Kompensation während des Hauptlaufes in Echtzeit erfolgen und fester Bestandteil der numerischen Steuerung sein. Gleichzeitig sollen auch beschleunigungsabhängige Einflüsse berücksichtigt werden.

Gemäß der Erfindung wird diese Aufgabe gelöst durch folgende Merkmale:

1.1 durch Störgrößen bedingte Nichtlinearitäten werden durch eine die Drehzahlsollwerte korrigierende Reibvorsteuerung kompensiert,

1.2 die Drehzahlsollwerte werden korrigiert, indem für jede Achse an Quadrantenübergängen mit dabei an dieser Achse auftretendem Vorzeichenwechsel ein Korrekturimpuls auf den entsprechenden Drehzahlsollwert aufgeschaltet wird,

1.3 der Aufschaltzeitpunkt des Korrekturimpulses erfolgt im Nulldurchgang des Drehzahlsollwertes,

1.4 bei einem Nulldurchgang des Drehzahlsollwertes vom negativen Bereich in den positiven Bereich wird die Aufschaltamplitude addiert, bei einem Nulldurchgang des Drehzahlsollwertes vom positiven Bereich in den negativen Bereich wird sie subtrahiert,

1.5 der Korrekturimpuls besitzt eine beschleunigungsabhängige Amplitude,

1.6 es wird die Dauer des Korrekturimpulses sowie der Verlauf der beschleunigungsabhängigen Amplitude für unterschiedliche Beschleunigungswerte als Kennlinie und/oder Kennlinienfeld für die jeweilig eingesetzte Maschine vorab manuell ermittelt, wobei die Amplitudenwerte so gewählt werden, daß sie ausgehend von einer Beschleunigung von Null größer werden, in einem Bereich mittlerer Beschleunigung auf hohem Niveau verlaufen und mit weiter steigender Beschleunigung wieder kleinere Werte annehmen,

1.7 die Reibvorsteuerung wird als zusätzlicher Vorsteuerzweig in eine Achsenregelung eingebunden.

Eine erste vorteilhafte Ausgestaltung der vorliegenden Erfindung ist besonders gut auf die physikalischen Eigenschaften der die Bahnungenauigkeiten bewirkenden wechselnden Reibungen, Lose- und Torsionseffekte angepaßt, indem deren Verlauf durch Verwendung eines geeigneten darauf abgestimmten Korrekturimpulses kompensiert wird. Diese ist gekennzeichnet durch folgendes Merkmal:

2.1 als Korrekturimpuls wird ein DT1-Impuls verwendet, dessen Abklingzeit konstant ist oder mit zunehmender Beschleunigung linear abnimmt.

Eine alternative Entwicklung der vorliegenden Erfindung vermeidet es, Knickpunkte der Kennlinien und/oder Kennlinienfelder der beschleunigungsabhängigen Amplitude einer jeweils verwendeten Werkzeugmaschine bei deren Inbetriebnahme manuell auszumessen und ermöglicht eine automatische Ermittlung dieser Werte durch die Steuerung selbst. Dies wird durch folgendes Merkmal erreicht.

3.1 durch Störgrößen bedingte Nichtlinearitäten werden durch eine die Drehzahlsollwerte korrigierende Reibvorsteuerung kompensiert,

3.2 die Drehzahlsollwerte werden korrigiert, indem für jede Achse an Quadrantenübergängen mit dabei an dieser Achse auftretendem Vorzeichenwechsel ein Korrekturimpuls auf den entsprechenden Drehzahlsollwert aufgeschaltet wird,

3.3 der Korrekturimpuls besitzt eine beschleunigungsabhängige Amplitude,

3.4 es wird die Dauer des Korrekturimpulses sowie der Verlauf der beschleunigungsabhängigen Amplitude für unterschiedliche Beschleunigungswerte als Kennlinie und/oder Kennlinienfeld für die jeweilig eingesetzte Maschine durch ein selbstlernendes wissensbasiertes System in einer Lernphase ermittelt,

3.5 als Lernkriterium zur Durchführung der Lernphase wird die Abweichung von dem idealen erwünschten Drehzahlistwert und dem tatsächlichen Drehzahlistwert in Form einer beim Drehzahlverlauf nach dem Nulldurchgang entstehenden Fehlfläche verwendet,

3.6 die Reibvorsteuerung wird als zusätzlicher Vorsteuerzweig in eine Achsenregelung eingebunden.

Eine erste vorteilhafte Ausgestaltung der alternativen Entwicklung ist besonders gut auf die physikalischen Eigenschaften der die Bahnungenauigkeiten bewirkenden wechselnden Reibungen, Lose- und Torsionseffekte angepaßt, indem deren Verlauf durch Verwendung eines geeigneten darauf abgestimmten Korrekturimpulses kompensiert wird. Dies ist gekennzeichnet durch folgendes Merkmal:

4.1 als Korrekturimpuls wird ein DT1-Impuls verwendet, dessen Abklingzeit konstant ist oder mit zunehmender Beschleunigung linear abnimmt.

Eine weitere vorteilhafte Ausgestaltung des erfindungsgemäßen Verfahrens mit Einsatz eines selbstlernenden wissensbasierten Systems setzt dafür ein besonders effektives neuronales Verfahren ein, das zum einen eine sehr hohe Genauigkeit der Kompensation von Bahnabweichungen ermöglicht und darüber hinaus sehr einfach trainiert werden kann. Dieses ist gekennzeichnet durch folgendes Merkmal:

5.1 als selbstlernendes wissensbasiertes System wird ein Neuronales Multilayer-Perceptron-Netz mit Fehler-Rückwärts-Korrekturverfahren als Lern-Regel eingesetzt.

Eine weitere vorteilhafte Ausgestaltung der vorliegenden Erfindung verwendet eine besonders einfache Form eines neuronalen Netzes, welche besonders gut und kostengünstig realisiert werden kann und eine für den Anwendungsfall ausreichende Kompensationsgenauigkeit gewährleistet. Diese ist gekennzeichnet durch folgendes Merkmal:

6.1 als selbstlernendes wissensbasiertes System wird ein Neuronales Cerebellar-Modell-Articulation-Computer-Netz eingesetzt.

Eine weitere vorteilhafte Ausgestaltung der vorliegenden Erfindung verwendet als Lernkriterium zum Training des neuronalen Netzes Eingangs- und Ausgangsgrößen, deren Werte bereits größtenteils in einer nicht fehlerkompensierenden numerischen Steuerung berechnet werden müssen, die die zur Abstrahierung und Generalisierung des vorhandenen Problems erforderlichen Informationen in einfacher Form zur Verfügung stellen und die proportional mit dem Aufschaltzeitpunkt des Korrekturimpulses anfallen, so daß die erfindungsgemäße numerische Steuerung mit einem sehr geringen Aufwand realisiert werden kann. Diese ist gekennzeichnet durch folgende Merkmale:

7.1 als Lernkriterium zur Zuordnung der Eingangsgrößen zu den erwünschten Ausgangsgrößen wird die Abweichung von dem idealen erwünschten Drehzahlistwert und dem tatsächlichen Drehzahlistwert in Form einer beim Drehzahlverlauf nach dem Nulldurchgang entstehenden Fehlfläche verwendet,
7.2 zur Ermittlung der Fehlfläche werden erwünschter idealer Drehzahlistwert und tatsächlicher Drehzahlistwert ab dem Aufschaltzeitpunkt erst differenziert, wobei ein konstanter Abstand zwischen dem Drehzahlsollwert und dem Drehzahlistwert entfällt, anschließend wieder integriert und zuletzt erneut über die Fehlfläche integriert.

Eine weitere vorteilhafte Ausgestaltung der vorliegenden Erfindung erweitert deren Funktionalität, indem sich das System selbsttätig an die sich während des Betriebes verändernden Bedingungen anpaßt und somit das Veranlassen eines erneuten Trainingsdurchganges eines neuronalen Netzes durch den Bediener überflüssig macht. Dieses ist gekennzeichnet durch folgendes Merkmal:

8.1 die Lern-Regel zur Ermittlung des Verlaufes der Kennlinien und/oder Kennlinienfelder der beschleunigungsabhängigen Amplitude wird in der Arbeitsphase weiter angewendet, so daß sich die Reibvorsteuerung ständig an geänderte Betriebsbedingungen adaptiert und so etwa Verschleißerscheinungen automatisch kompensiert werden.

Eine weitere vorteilhafte Ausgestaltung der vorliegenden Erfindung optimiert die Bedingung des Aufschaltzeitpunktes des Korrekturimpulses und ermöglicht eine mit besonders einfachen Mitteln aufgebaute Realisierung der Korrektur der Istwerte. Diese ist gekennzeichnet durch folgende Merkmale:

9.1 der Aufschaltzeitpunkt des Korrekturimpulses erfolgt im Nulldurchgang des Drehzahlsollwertes,
9.2 bei einem Nulldurchgang des Drehzahlsollwertes vom negativen Bereich in den positiven Bereich wird die Aufschaltamplitude addiert, bei einem Nulldurchgang des Drehzahlsollwertes vom positiven Bereich in den negativen Bereich wird sie subtrahiert.

Eine vorteilhafte Vorrichtung zur Durchführung des Verfahrens gemäß der vorliegenden Erfindung zeichnet sich dadurch aus, daß sie mit wenigen zusätzlichen Komponenten und dadurch mit begrenztem Aufwand effektiv realisiert werden kann und darüber hinaus in eine bereits bestehende Achsenregelung integriert werden kann. Diese Vorrichtung besitzt folgende Merkmale:

10.1 eine Reibvorsteuerung ist als zusätzlicher Vorsteuerzweig in eine Achsenregelung eingebunden,
10.2 es ist ein erstes Differenzierglied zum Differenzieren der Lagesollwerte und ein weiteres Differenzierglied zum Differenzieren der erhaltenen Drehzahlsollwerte zu Beschleunigungssollwerten vorgesehen,
10.3 die erhaltenen Drehzahlsollwerte sind einer Aufschaltlogik zur Steuerung des Aufschaltzeitpunktes im Nulldurchgang der Drehzahlsollwerte aufgeschaltet,
10.4 es ist eine Speichereinheit zur Aufnahme einer beschleunigungsabhängigen Amplitudenkennlinie vorgesehen, die von den erhaltenen Beschleunigungssollwerten angesteuert wird, wobei die Amplitudenkennlinie ausgehend von einer Beschleunigung von Null größer wird, in einem Bereich mittlerer Beschleunigung auf hohem Niveau verläuft und mit weiter steigender Beschleunigung wieder kleinere Werte annimmt,
10.5 anhand der Amplitudenkennlinie ermittelte Aufschaltamplituden sind einem Korrekturimpulsglied zugeführt, von wo Drehzahlkorrekturwerte generiert und einem Lagereglersignal der Achsenregelung hinzuaddiert werden.

Eine alternative Vorrichtung ermöglicht den Einsatz eines neuronalen Netzes als selbstlernenden wissenbasiertes System in der oben dargestellten Vorrichtung, kann mit einem geringen Mehraufwand realisiert werden und integriert darüber hinaus alle vorteilhaften Merkmale der bisher dargelegten Ausgestaltungsformen der vorliegenden Erfindung sowohl hinsichtlich des Verfahrens als auch der Vorrichtung in seiner bisher dargestellten Form. Diese Vorrichtung besitzt folgende Merkmale:

11.1 eine Reibvorsteuerung ist als zusätzlicher Vorsteuerzweig in eine Achsenregelung eingebunden,
11.2 es ist ein erstes Differenzierglied zum Differenzieren der Lagesollwerte und ein weiteres Differenzierglied zum Differenzieren der erhaltenen Drehzahlsollwerte zu Beschleunigungssollwerten vorgesehen,
11.3 die erhaltenen Drehzahlsollwerte sind einer Aufschaltlogik zur Steuerung des Aufschaltzeitpunktes aufgeschaltet,
11.4 es ist ein Neuronales Netz vorgesehen, dem die Drehzahlsollwerte und Beschleunigungssollwerte eingangsseitig zugeführt sind,
11.5 an den Ausgang des Neuronalen Netzes ist ein Fehlerwert geführt, der in einem logischen Schaltglied aus der Differenz von Drehzahlsollwert und Drehzahlistwert gebildet ist,
11.6 vom Neuronalen Netz ist die Aufschaltlogik mit einem Amplitudenwert und einer Zeitkonstante versorgt,
11.7 es ist ein Korrekturimpulsglied vorgesehen, welches von der Aufschaltlogik gemäß der Amplitude, der Zeitkonstanten und anhand der Drehzahlsollwerte angesteuert ist und von wo Drehzahlkorrekturwerte generiert und einem Lagereglersignal der Achsenregelung hinzuaddiert werden.

Die mit der Erfindung erzielten Vorteile bestehen insbesondere darin, daß mit dem dargestellten Verfahren beim Reversieren einer Achse auftretende Bahnungenauigkeiten, die auf den unterschiedlichsten Ursachen beruhen können, mit einem einzigen Korrekturverfahren gemeinsam kompensiert werden können. So werden sowohl Ungenauigkeiten der Maschinenachsen aufgrund wechselnder Reibungsverhältnisse als auch aufgrund von Nichtlinearitäten der Mechanik, wie etwa Loseeffekten und Torsionseffekten kompensiert. Hinzu kommt, daß die Fehlerkompensation in Echtzeit erfolgt und das erfindungsgemäße Verfahren fester Bestandteil einer numerischen Steuerung nach herkömmlichem Muster wird. Im Falle des Einsatzes eines selbstlernenden wissensbasierten Systems wie etwa eines neuronalen Netzes mit Error-Backpropagation-Lernverfahren läßt sich der Vorteil erzielen, daß die aufwendige manuelle Bestimmung einer Kennlinie bzw. eines Kennlinienfeldes durch den Bediener entfällt und diese Tätigkeit automatisiert wird. Hinzu kommt, daß sich die aufgeführten Vorteile in vorliegender Erfindung besonders effektiv durch Einsatz weniger zusätzlicher Komponenten, mit hoher Präzision und kostengünstig realisieren lassen.

Ein Ausführungsbeispiel der Erfindung ist in den Zeichnungen dargestellt und wird im folgenden näher erläutert. Dabei zeigen:

FIG 1    der Verlauf einer Drehzahl mit Vorzeichenwechsel im Bezug auf das jeweilige Reibmoment unter Berücksichtigung einer Reibkonstante sowie Hängenbleiben der Ist-drehzahl aufgrund von vorhandener Reibung,

FIG 2    Korrektur eines aufgrund von Reibung fehlerhaften Istdrehzahlverlaufes mit Hilfe eines Korrekturimpulses,

FIG 3    Kreiskontur mit Quadrantenübergängen zweier interpolierender Achsen mit aufgrund von Reibeeffekten vom gewünschten Solldrehzahlverlauf abweichendem Istdrehzahlverlauf,

FIG 4    DT1-Korrekturimpuls,

FIG 5    beschleunigungsabhängige Amplitudenkennlinie,

FIG 6    reale Kennlinie für die Quadrantenfehlerkompensation,

FIG 7    Einbindung der Reibvorsteuerung in eine Achsenregelung,

FIG 8    Quadrantenfehlerkompensation mit Einsatz eines neuronalen Netzes.

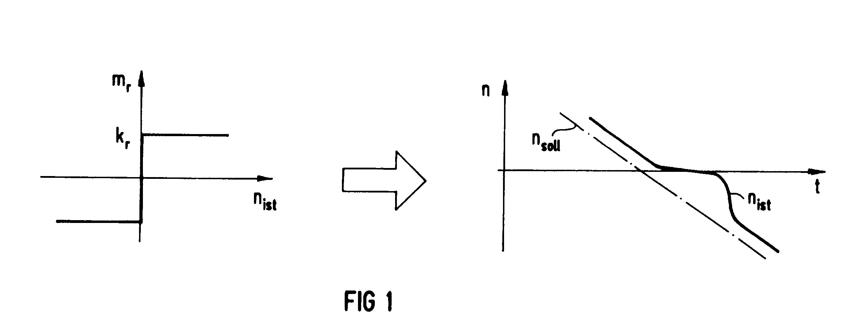

In der Darstellung in FIG 1 ist das Verhalten wechselnder Reibungsverhältnisse vereinfacht anhand einer Signum-Funktion modelliert, wobei n die Istdrehzahl, $k_r$ die Reibkonstante und $m_r$ das jeweilige Reibmoment sind. Gezeigt sind zwei Koordinatensysteme. Im linken Koordinatensystem ist die Drehzahl über das jeweilige Reibmoment aufgetragen. Dabei wechselt die Drehzahl ihr Vorzeichen und damit verbunden auch das Reibmoment $m_r$. Das hat im Drehzahldiagramm, in dem die Drehzahl n über die Zeit t aufgetragen ist, zur Folge, daß die Ist-Drehzahl $n_{ist}$ kurzfristig in der Zeitachse t "hängen" bleibt. Das hat zur Folge, daß der tatsächliche Ist-Drehzahlverlauf $n_{ist}$, welcher in Form einer durchgezogenen Linie dargestellt ist, von der gewünschten Solldrehzahl $n_{soll}$, welche in Form einer unterbrochen gezeichneten Geraden dargestellt ist, abweicht.

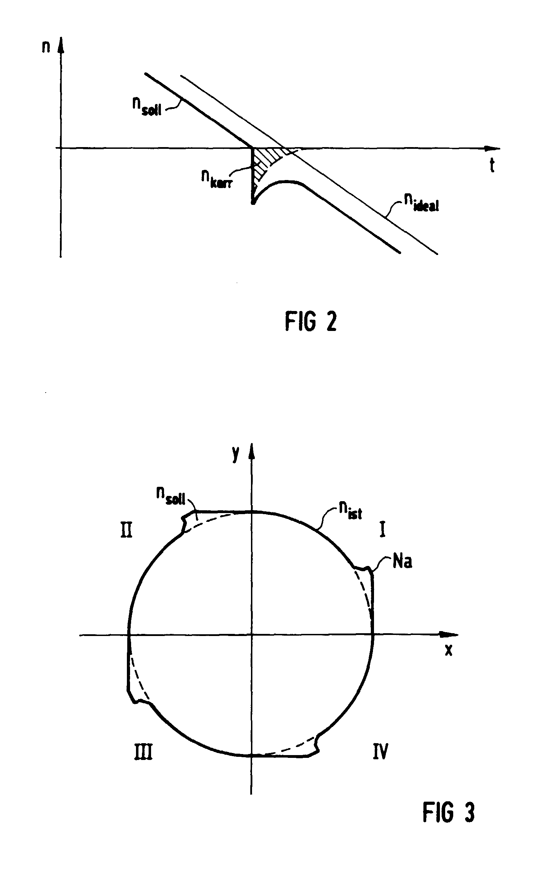

Desweiteren ist in der Darstellung in FIG 2 ein weiteres Drehzahldiagramm gezeigt, in dem die Drehzahl n über die Zeit t aufgetragen ist. In dem Diagramm wird dargestellt, wie ein vorgegebener Solldrehzahlverlauf $n_{soll}$ mit einem Korrekturwert $n_{korr}$ beaufschlagt werden muß, damit der sich tatsächlich einstellende Drehzahlistverlauf $n_{ideal}$ dem Verlauf der Solldrehzahl $n_{soll}$, so wie er in FIG 1 dargestellt ist, entspricht. Der Korrekturimpuls $n_{korr}$ ist in Form einer gestrichelten Linie angedeutet und schließt die hervorgehobene Fläche zwischen dieser strichpunktierten Linie und der Zeitachse ein.

In der Darstellung in FIG 3 ist der Verlauf einer Kreisfahrt dargestellt, welcher mit zwei interpolierenden Achsen x und y gefahren wird. Die Abszisse gibt die Achse in X-Richtung, die Ordinaten die Achse in Y-Richtung wieder. Dadurch werden die vier Quadranten I, II, III und IV gebildet. Der Istdrehzahlverlauf $n_{ist}$ weicht von der vorgegebenen Solldrehzahl $n_{soll}$ der Kreiskontur ab. Der Istdrehzahlverlauf $n_{ist}$ weist nach jedem Quadrantenübergang aufgrund des durch die Reibung bedingten "Hängenbleibens" sogenannte "Nasen" Na auf, die den idealen Kreisumfang in die von seinem Mittelpunkt entgegengesetzte Richtung verlassen. Der erwünschte Verlauf der Kreiskontur, der Solldrehzahlverlauf $n_{soll}$, ist im Bereich der "Nasen" Na in Form eines gestrichelten Kreisumfanges dargestellt.

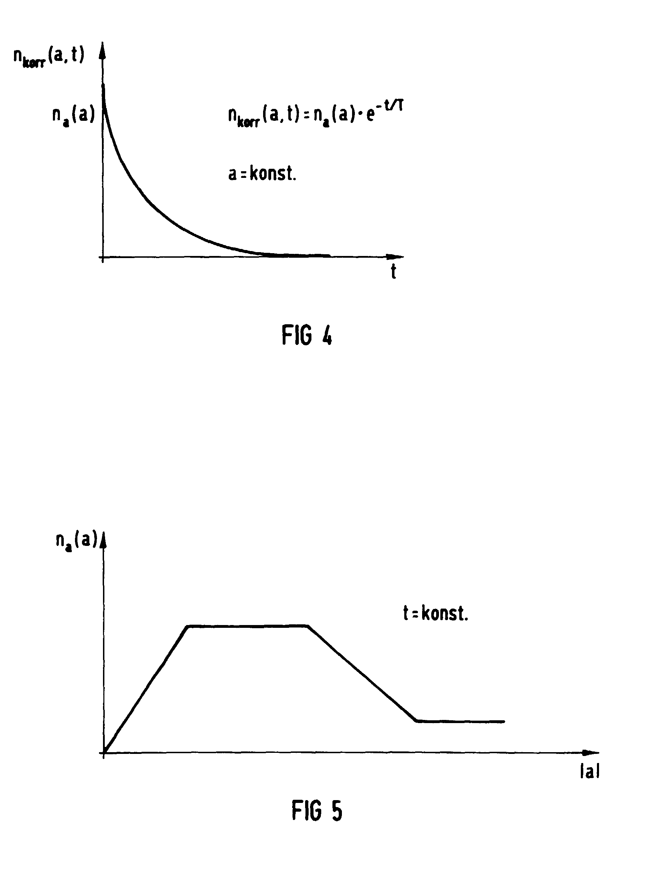

In der Darstellung in FIG 4 ist der Verlauf eines DT1-Korrekturimpulses $n_{korr}(a,t)$ gezeigt, welcher über die Zeit t aufgetragen ist. Der Verlauf beginnt bei einem beschleunigungsabhängigen Aufschaltamplitudenwert $n_a(a)$ und nähert sich mit exponentiellem Verlauf an die Zeitachse bis zum Erreichen eines Wertes von Null an. Die Darstellung gilt jeweils für eine als konstant angencmmene Beschleunigung a.

In der Darstellung in FIG 5 ist ein möglicher Verlauf der Amplitudenkennlinie $n_a(a)$ über den Betrag der Beschleunigung lal für eine als konstant angenommene Zeit t aufgetragen. Dabei steigt der Verlauf im Bereich geringer Beschleunigung stark an, verläuft schließlich konstant, nimmt dann ab und pendelt sich auf einem geringeren Wert ein, auf dem er weiterhin konstant verläuft.

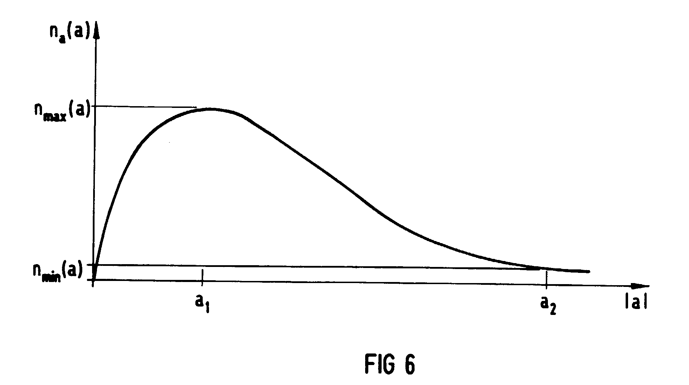

In der Darstellung in FIG 6 ist ein realer Verlauf der Amplitudenkennlinie aus FIG 5 für die Quadrantenfehlerkompensation wie beispielsweise zum Verfahren einer Kreiskontur nach FIG 3 gezeigt. Wiederum ist der zu ermittelnde, von der Beschleunigung abhängende Aufschaltamplitudenstartwert $n_a(a)$ eines Korrekturimpulses im Bereich zwischen seinem minimalen und maximalen Wert aufgetragen. Ausgehend von einer Beschleunigung von Null steigt die Amplitude zuerst stark, dann mit abnehmenden Drehzahlzuwächsen bis zum Erreichen einer maximalen Amplitude $n_{max}(a)$ bei der Beschleunigung al an, fällt von dort allmählich ab und erreicht schließlich unabhängig von der weiteren noch höheren Beschleunigung bei a2 eine minimale Amplitude $n_{min}(a)$.

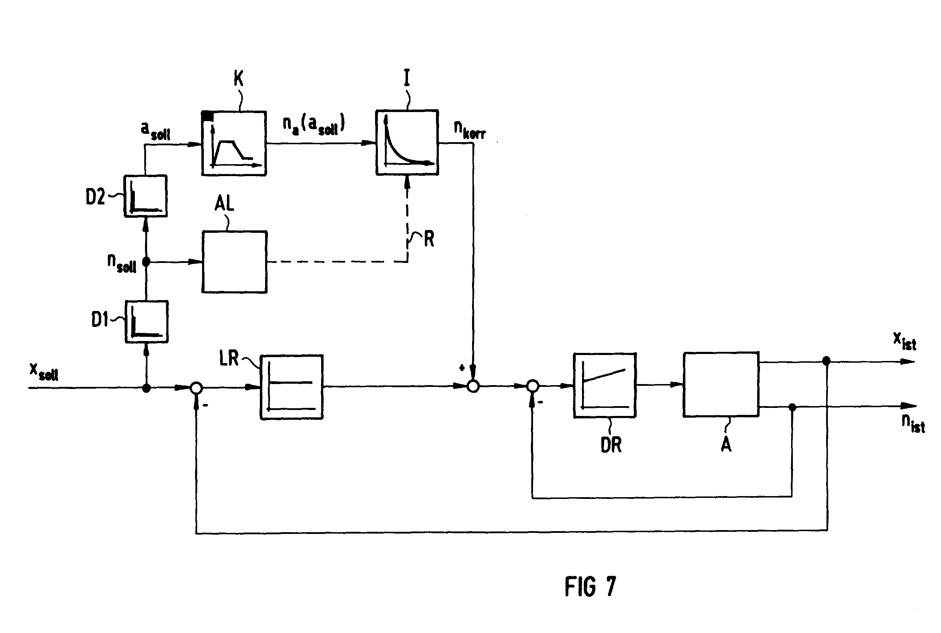

In der Darstellung in FIG 7 ist die Einbindung der Reibvorsteuerung in eine bereits bestehende Achsenregelung gezeigt. Als Eingangswert gelangt ein Lagesollwert $x_{soll}$ in die Vorrichtung, dieser wird in einem ersten Differenzierer D1 differenziert zu einem Drehzahlsollwert $n_{soll}$, der eine Aufschaltlogik AL zugeführt wird. Desweiteren wird der Drehzahlsollwert $n_{soll}$ in einem weiteren Differenzierer D2 differenziert und die so erhaltene Sollbeschleunigung $a_{soll}$ einer Speichereinheit K zugeführt, welche die beschleunigungsabhängige Amplitudenkennlinie beinhaltet. Der daraus ermittelte Korrekturstartwert $n_a(a_{soll})$, auch als Aufschaltamplitude bezeichnet, gelangt zu einem Impulsgeber I, welcher einen geeigneten DT1-Korrekturimpuls $n_{korr}$ erzeugt. Die Aufschaltlogik AL steuert den Anlaufzeitpunkt über ein Reset-Signal R mit welchem sie den Impulsgeber I ansteuert. Im Rahmen der bereits vorhandenen Achsenregelung gelangt der eingangsseitig zugeführte Lagesollwert $x_{soll}$ zu einem Lageregler LR. Dessen Ausgangswert wird mit dem Korrekturimpuls $n_{korr}$ addiert und einem Drehzahlregler DR, welcher in der Regel als PI-Regler ausgeführt ist, zugeführt und gelangt von dort zu einer Maschinenachse A. An deren Ausgang stehen

der Lageistwert $x_{ist}$ sowie der Drehzahlistwert $n_{ist}$ zur Verfügung. Der Lageistwert $x_{ist}$ wird negativ auf den eingangsseitig zur Verfügung gestellten Lagesollwert zurückgekoppelt, der Drehzahlistwert $n_{ist}$ wird negativ auf den Eingang des Drehzahlreglers DR zurückgekoppelt.

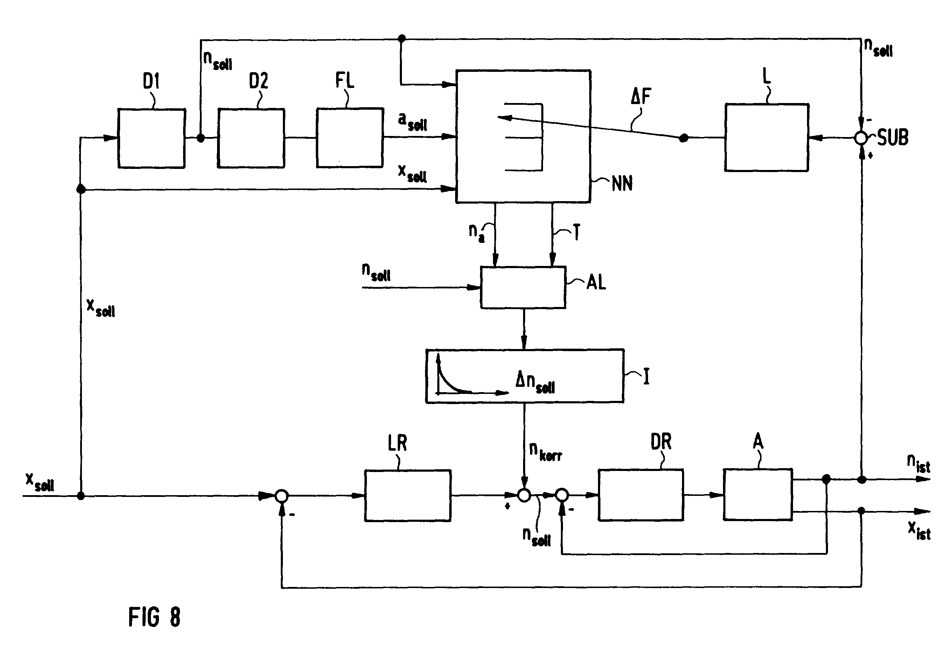

In der Darstellung in FIG 8 ist die bereits in FIG 7 beschriebene Vorrichtung zur Quadrantenfehlerkompensation mit Einsatz eines neuronalen Netzes gezeigt. Es unterscheidet sich von der in FIG 7 dargestellten Anordnung, indem der durch den Differenzierer D2 gebildete Beschleunigungssollwert zusätzlich einen Filter FL durchläuft, ehe er dem neuronalen Netz NN an dessen Eingangsschicht zugeführt wird. Ebenso gelangt der Lagesollwert $x_{soll}$ an den Eingang des neuronalen Netzes NN. Desweiteren wird der nach Durchlaufen des Differenzierers D1 zur Verfügung stehende Drehzahlsollwert $n_{soll}$ an den Eingang des neuronalen Netzes NN geführt. Der Drehzahlsollwert $n_{soll}$ und der am Ausgang der Maschinenachse A zur Verfügung stehende Drehzahlistwert $n_{ist}$ gelangen zu einer Subtraktionseinheit SUB, in der der Drehzahlsollwert $n_{soll}$ von dem Drehzahlistwert $n_{ist}$ abgezogen wird und die Differenz einer Logikeinheit L zugeführt wird. Dort wird die Differenz zu einem Fehlerterm F aufbereitet und dieser Fehlerterm der Ausgangsschicht des neuronalen Netzes NN zugeführt. An den Ausgängen für die Arbeitsphase stehen die Amplitude a und die Zeitkonstante T zur Verfügung, welche die Aufschaltlogik AL ansteuern. Darüber hinaus gelangen, wie auch schon in der Vorrichtung aus FIG 7 die Drehzahlsollwerte $n_{soll}$ zur Aufschaltlogik AL. Diese steuert einen Korrekturimpulsgeber I an, von dessen Ausgang ein Korrekturimpuls $n_{korr}$ mit dem Ausgangssignal des Lagereglers LR addiert wird.

Wird eine Achse von einer negativen auf eine positive Geschwindigkeit beschleunigt oder umgekehrt, so wird die Bewegung beim Nulldurchgang der Geschwindigkeit wegen wechselnder Reibungsverhältnisse und Nichtlinearitäten der Mechanik wie etwa Loseeffekten oder Torsionseffekten gestört. Bei miteinander interpolierenden Achsen führt dieses Verhalten in der Regel zu Konturfehlern. Aus diesem Grunde werden erfindungsgemäß mit Hilfe einer Reibvorsteuerung, die eine geeignete Korrektur des Drehzahlsollwertes $n_{soll}$ durchführt, beim Reversieren einer Maschinenachse auftretende Bahnungenauigkeiten größtenteils kompensiert. Hierzu wird eine Kennlinie für die Amplitude des Korrekturimpulses $n_a(a)$ bestimmt, die auf den Drehzahlollwert $n_{soll}$ aufgeschaltet wird.

Um einen zur Kompensation der Bahnungenauigkeiten geeigneten Korrekturimpuls zu bestimmen, empfiehlt es sich, sich den Effekt wechselnder Reibungsverhältnisse an einer einzelnen Maschinenachse zu vergegenwärtigen. In FIG 1 ist dazu das Verhalten der Reibung vereinfacht mit einer Signum-Funktion modelliert, wobei $n_{ist}$ den Drehzahlistwert, $k_r$ die Reibkonstante und $m_r$ das jeweilige Reibmoment darstellen. Wechselt nun die Istdrehzahl $n_{ist}$ die Richtung, so wechselt auch das Reibmoment $n_r$ sein Vorzeichen und im Drehzahldiagramm bleibt der Drehzahlistwert kurzfristig an der Zeitachse "hängen". Das hat zur Folge, daß der tatsächliche Verlauf der Achse vom programmierten Drehzahlprofil $n_{soll}$ abweicht.

Besonders deutlich tritt dies z.B. auch bei Kreiskonturen auf, wobei sich bei den sogenannten Quadrantenübergängen, in FIG 2 dargestellt durch I, II, III und IV, eine Achse mit der maximalen Bahngeschwindigkeit bewegt, während die zweite Achse das Vorzeichen ihrer Geschwindigkeit ändert, wobei sie kurzzeitig zum Stillstand kommt. Die dadurch bedingten Abweichungen von der Kreiskontur können mit einem Kreisformtest bzw. einer Kreisfahrt ermittelt werden. Die Ergebnisse eines solchen Kreisformtestes sind in FIG 3 dargestellt. Dieser zeigt besonders deutlich den Effekt des "Hängenbleibens", der sich typischerweise an den Quadrantenübergängen ohne die erfindungsgemäßen Maßnahmen zur Kompensation darstellt. Deutlich sind die Abweichungen, sogenannte "Nasen" Na, des Drehzahlistverlaufes $n_{ist}$ zu erkennen.

Mit der gemäß der vorliegenden Erfindung neu entwickelten Reibvorsteuerung wird nun erreicht, das Hängenbleiben einer Achse durch Aufschaltung eines Korrekturimpulses auf den Drehzahlsollwert zu verhindern. Als Korrekturimpuls wird ein DT1-Impuls mit beschleunigungsabhängiger Amplitude $n_a(a)$ und mit konstanter Abklingzeit T verwendet. Der zeitliche Verlauf dieses Korrekturimpulses ist in FIG 4 dargestellt und beschreibt eine exponentiell abnehmende Funktion, deren Aufschaltamplitude $n_a(a)$ einstellbar ist. Dieser Zusammenhang ist mathematisch in der folgenden Berechnungsvorschrift wiedergegeben:

$$n_{korr}(a,t) = n_a(a) \cdot e^{-\frac{t}{T}}$$

Werden Amplitude a und Dauer T des Korrekturimpulses geeignet gewählt, so kann der gewünschte Verlauf des Drehzahlistwertes $n_{ist}$ erzielt werden und die Konturabweichungen verschwinden. Ein solcher Fall ist exemplarisch in FIG 2 dargestellt. Dabei wird das in FIG 1 gezeigte Hängenbleiben des Drehzahlistverlaufes $n_{ist}$ durch Aufschalten eines Korrekturimpulses $n_{korr}$ auf den Drehzahlsollwert $n_{soll}$ korrigiert und es resultiert der dem programmierten Solldrehzahlprofil entsprechende um eine Ersatzzeitkonstante der numerischen Steuerung verschobene Istdrehzahlverlauf $n_{ist}$ aus FIG 2. Um eine ausreichend gute Kompensation der Reibungs-, Lose- und Torsionseffekte zu erreichen, muß die Impulsamplitude in Abhängigkeit von der Beschleunigung a aufgeschaltet werden, wohingegen die Impulsdauer T konstant sein darf. Die Aufschaltamplitude des Korrekturimpulses kann somit nicht über den gesamten Beschleunigungsbereich konstant sein, denn bei höheren Beschleunigungen muß mit einem kleineren Kompensationswert vorgesteuert werden als bei kleineren Beschleunigungen. Bei kleinen Achsgeschwindigkeitsänderungen wie etwa beim Mikro-Schritt-Fahren, darf die Quadrantenfehlerkompensation überhaupt nicht eingreifen. Als Amplitudenkennlinie ermittelt man daher in Näherung der realen Verhältnisse die in FIG 5 dargestellte Abhängigkeit. Unter Annahme eines konstanten Zeitpunktes t nimmt der Verlauf der Aufschaltamplitude $n_a(a)$ folgende Gestalt an. Ausgehend von einer Beschleunigung von Null steigt die Korrekturamplitude steil an, um im Bereich einer mittleren Beschleunigung auf einem konstanten hohen Wert zu verlaufen. Mit weiter zunehmender Beschleunigung sinkt der Wert der Korrekturamplitude wieder und pendelt sich auf einem konstanten, aber niedriger liegenden Wert für die Korrekturamplitude im Bereich sehr hoher Beschleunigungen ein.

Die Knickpunkte dieser Kennlinien sind von der jeweiligen Werkzeugmaschine abhängig und müssen bei der Inbetriebnahme ausgemessen werden. Aus diesem Grund beinhaltet die Quadrantenfehlerkompensation gemäß der vorliegenden Erfindung eine manuell einstellbare Kennlinie zur beschleunigungsabhängigen Bewertung der Aufschaltamplitude. Die Kennlinie ist dabei über Maschinendaten parametrierbar. Stützpunkte der Kennlinie werden bei der Inbetriebnahme der Quadrantenfehlerkompensation der Reibvorsteuerung für die jeweilige Maschine mit einem Kreisformtest meßtechnisch ermittelt. Eine so ermittelte Kennlinie für die Quadrantenfehlerkompensation ist in FIG 6 als Beispiel dargestellt. Der reale Verlauf für die Korrekturamplitude $n_a(a)$ unterscheidet sich von der experimentell entwickelten Kennlinie aus FIG 5 durch einen nichtlinearen Verlauf. Im Bereich sehr kleiner Beschleunigungen zwischen Null und a1 steigt die Korrekturamplitude steil an bis zum Erreichen einer maximalen Amplitude $n_{max}$ (a) bei Beschleunigung a1. Von dort an sinkt der Wert der Korrekturamplitude mit zunehmender Beschleunigung und pendelt sich schließlich mit Erreichen einer Beschleunigung größer a2 auf einen minimalen Wert für die Korrekturamplitude $n_{min}(a)$ ein.

Für den in FIG 3 dargestellten Kreisformtest bleiben die Drehzahlistwerte $n_{ist}$ ohne diese erfindungsgemäße Kompensation wegen der Reibung und anderen Störeinflüssen unter Umständen mehrere Lagereglertakte gleich Null, nachdem die Solldrehzahl einer Achse ihren Nulldurchgang hatte. Dieses Verhalten führt zu den bereits erwähnten Konturfehlern. Durch die Aufschaltung eines zusätzlichen, vorzeichenrichtigen und genügend großen Korrekturimpulses $n_{korr}$ beim Nulldurchgang der Drehzahlsollwerte $n_{soll}$ wird die hängende Achse losgerissen und der Konturfehler minimiert. Die Ermittlung des Aufschaltzeitpunktes für den Korrekturimpuls erfolgt durch eine spezielle Aufschaltlogik AL. Erfindungsgemäß findet die Aufschaltung der Kompensationsimpulse bzw. Korrekturimpulses $n_{korr}$ im Nulldurchgang der Drehzahlsollwerte $n_{soll}$ statt. Dies ist darin begründet, daß der Nulldurchgang der Drehzahlsollwerte $n_{soll}$ genau erfaßt werden kann, während der Nulldurchgang der Drehzahlistwerte $n_{ist}$ schwanken kann. Hinzu

kommt, daß eine Lageregelung in der Regel selbst verzögert reagiert, wodurch ein von der Istdrehzahl abgeschalteter Korrekturimpuls bereits zu spät wirken würde, um gute Kompensationsergebnisse zu erzielen. Der Zeitpunkt, ab dem die Kompensation die Bewegung der Achse unterstützen muß, ist der Umkehrpunkt der Fahrrichtung, also ein Vorzeichenwechsel in der Drehzahl. Die Drehzahlistwerte $n_{ist}$ folgen jedoch den Drehzahlsollwerten $n_{soll}$ verzögert um die Ersatzzeitkonstante der verwendeten Drehzahlregelung. Aufgrund dieses 'Time-Lag' ist die Istdrehzahl zur Ermittlung des Aufschaltzeitpunktes daher nicht geeignet. Desweiteren wird anhand des Kreisformtestes deutlich, daß erst nach dem Quadrantenübergang eine Kompensation erforderlich ist. Der Quadrantenübergang einer Achse ist bei einer Kreisfahrt aber durch den Nulldurchgang der zugehörigen Solldrehzahl $n_{soll}$ gekennzeichnet. Als Bedingung für den Aufschaltzeitpunkt eines Korrekturimpulses wird die Richtung des Nulldurchganges bestimmt. Erfolgt ein Quadrantenübergang vom positiven Bereich in den negativen Drehzahlbereich, so wird der Drehzahlsollwert $n_{soll}$ durch eine Subtraktion des Korrekturimpulses kompensiert. Im anderen Fall eines Nulldurchganges aus dem negativen Bereich in den positiven Bereich wird der Korrekturimpuls auf den entsprechenden Drehzahlsollwert $n_{soll}$ aufaddiert.

Zur Realisierung einer Reibvorsteuerung mit Quadrantenfehlerkompensation als integralem Bestandteil einer Achsenregelung wird diese als zusätzlicher Vorsteuerzweig in eine herkömmliche Achsenregelung eingebunden. Eine solche erfindungsgemäße Vorrichtung ist in FIG 7 gezeigt. Eingangsseitig gelangen standardgemäß Lagesollwerte $x_{soll}$ in die Achsenregelung. Diese Lagesollwerte werden nun gemäß der vorliegenden Erfindung in einer ersten Differenziereinheit D1 zu Drehzahlsollwerten abgeleitet. Diese Drehzahlsollwerte $n_{soll}$ steuern eine Aufschaltlogik AL an, die für das Zurücksetzen bzw. den Reset R eines den Korrekturimpuls $n_{korr}$ erzeugenden Impulsgebers I beim Nulldurchgang der Drehzahlsollwerte $n_{soll}$ sorgt. Die von dem ersten Differenzierer D1 erzeugten Drehzahlsollwerte $n_{soll}$ werden in einer weiteren Differenziereinheit D2 abgeleitet zu Beschleunigungssollwerten $a_{soll}$. Mit diesen wird eine Speichereinheit K, in welche der Verlauf der beschleunigungsabhängigen Korrekturamplitude eingespeichert ist, angesteuert. Am Ausgang der Speichereinheit K steht demnach die für die gewünschte Beschleunigung $a_{soll}$ passende Korrekturamplitude $n_a$ zur Verfügung. Mit dieser als Startwert wird der Korrekturimpulsgeber I, bevorzugterweise ein DT1-Glied beaufschlagt. Die vom Impulsgeber I erzeugten Kompensations- bzw. Korrekturimpulse $n_{korr}$ schließlich werden dem Ausgangswert des Lagereglers LR einer herkömmlichen Achsenregelung hinzuaddiert. Ein so entstandener korrigierter Drehzahlsollwert gelangt nun weiter standardgemäß zu einem Drehzahlregler DR, in der Regel einem PI-Regler, und dessen Ausgangswerte werden zu einer Werkzeugmaschinenachse geführt.

Deren jeweiliger Lagesollwert $x_{ist}$ sowie der Drehzahlistwert $n_{ist}$ werden nun in der Achsenregelung zurückgekoppelt. Der Drehzahlsollwert $n_{ist}$ wird negativ an den Eingang des Drehzahlreglers DR rückgekoppelt, jedoch erst nach der Addition des Ausgangswertes des Lagereglers LR mit dem Korrekturimpuls $n_{korr}$. Der Lageistwert $x_{ist}$ wird an den Eingang des Lagereglers LR negativ rückgekoppelt, also von den eingehenden Lagesollwerten $x_{soll}$ abgezogen. Die für die Reibvorsteuerung verwendeten Lagesollwerte werden davon jedoch nicht berührt.

Mit der vorliegenden Erfindung kann nun jedoch darüber hinaus auch noch das aufwendige manuelle Ausmessen der Knickpunkte für die Amplitudenkennlinie vermieden und dieser Vorgang automatisiert werden. Die in der Praxis relativ langwierige Ermittlung der Kennlinien bzw. Kennlinienfelder der beschleunigungsabhängigen Amplitude werden mit Hilfe eines selbstlernenden wissensbasierten Systems automatisch erlernt und so wird die Inbetriebnahmezeit der Maschine verkürzt.

Ein vorteilhaftes Ausführungsbeispiel mit Einsatz eines selbstlernenden wissensbasierten Systems ermittelt die erwähnte Abhängigkeit der Korrekturamplitude von der Beschleunigung mit einem neuronalen Netz in dessen Lernphase mit dem Ziel, die mit der bisherigen manuell ermittelten Lösung für die Quadrantenfehlerkompensation erzielte Genauigkeit ebenfalls zu erreichen. Als ein besonders geeigneter Vertreter aus der Gruppe der neuronalen Netze wird ein sogenanntes Error-Back-Propagation-Netz eingesetzt. Neuronale Netze NN können die Zusammenhänge zwischen mehreren Ein- und Ausgangsgrößen lernen, sie können mithin also nicht nur Kennlinien, sondern auch ganze Kennlinienfelder erlernen. Zum Lernen der beschleunigungsabhängigen Korrekturamplitude $n_a(a)$ wird die ursprüngliche Kennlinie nach FIG 6 durch ein Kennlinienfeld ersetzt, das den Zusammenhang von Korrekturamplitude $n_a$ und Abklingzeit T auf der einen Seite als Funktion der Eingangsgrößenposition in Form der Lagesollwerte $x_{soll}$ und Beschleunigung a auf der anderen Seite ersetzt. Dadurch verbessert sich die erzielbare Genauigkeit des Kompensationsverfahrens bei großen Achsverfahrwegen weiter. Der Aufschaltzeitpunkt für die Korrekturimpulse wird nach wie vor durch eine Aufschaltlogik AL vorgegeben, somit nicht vom neuronalen Netz NN gelernt.

Das Lernen bei Error-Backpropagation-Netzen erfolgt nach den sogenannten verallgemeinerten Delta-Regel in Form eines Fehler-Rückwärts-Korrekturverfahrens. Zur Durchführung dieser Lern-Regeln benötigt das neuronale Netz NN ein sogenanntes Lernkriterium anhand dessen es in der Trainingsphase bzw. Lernphase abgeglichen werden kann, um einer oder mehreren Eingangsgrößen entsprechende erwünschte Ausgangsgrößen zuzuordnen. Von der Wahl dieses Lernkriteriums wird die Güte und Genauigkeit beeinflußt, mit der die erwünschten Ausgangsgrößen erzeugt werden können. Zur Ermittlung eines günstigen Lernkriteriums macht sich die vorliegende Erfindung den Zusammenhang zwischen Solldrehzahl $n_{soll}$ und Istdrehzahl $n_{ist}$ zu nutze, der sich ohne Maßnahmen zur Quadrantenfehlerkompensation einstellt. Legt man einen sinusförmigen Verlauf der Solldrehzahl zugrunde, so folgt die Istdrehzahl entsprechend einer Ersatzzeitkonstanten des Drehzahlreglers. Aufgrund der auftretenden Reibungseffekte und anderen mechanischen Störgrößen wie Loseffekten und Torsionseffekten weicht der Drehzahlistwert $n_{ist}$ jedoch vom idealen sinusförmigen Verlauf ab. Dadurch entsteht nach dem Nulldurchgang eine Fehlfläche zwischen dem sich erwünschtermaßen einstellenden idealen Drehzahlistwert $n_{ideal}$ und dem tatsächlichen Drehzahlistwert $n_{ist}$. Die Größe dieser Fehlfläche wird als Lernkriterium verwendet. Da der Trainingsvorgang eines neuronalen Netzes NN anhand von beispielhaften Trainingsdaten erfolgt und dieses Datenmaterial in mehreren sogenannten Epochen durchlaufen werden muß, bis der Lernvorgang konvergiert, ist ein Verlauf für den tatsächlichen Drehzahlistwert $n_{ist}$, bei dem die Fehlfläche durch den Lernvorgang oder auch durch Störungen im Regelkreis um den idealen sinusförmigen Verlauf des gewünschten idealen Drehzahlistwertes $n_{ideal}$ pendelt, nicht zu einer Ermittlung der Fehlfläche mittels einer einfachen Summation geeignet. Durch eine einfache Summation würde sich die Fehlfläche zu Null berechnen, wenn die positiven und negativen Anteile gleich groß sind. Sofern die positiven und negativen Anteile der Fehlfläche unterschiedlich sind, würde in einem solchen Fall die Berechnung auch nur sehr ungenau erfolgen. Damit wird im Falle einer einfachen Summation eine falsche Aufschalt- bzw. Korrekturamplitude für die Quadrantenfehlerkompensation ermittelt. Komplizierter stellen sich die Verhältnisse dar, wenn aufgrund von Störungen der Drehzahlistwerte der Verlauf von $n_{ist}$ mehrfach um den idealen sinusförmigen Verlauf pendelt. Auch in solchen Fällen führt eine einfache Summation der Fehlflächen zu Problemen. Daher werden bei vorliegender Erfindung zur genauen Ermittlungen der Fehlflächen der ideale Drehzahlistwert $n_{ideal}$ und der tatsächliche Drehzahlistwert $n_{ist}$ ab dem Aufschaltzeitpunkt zunächst differenziert, so daß aus der Drehzahl die entsprechende Beschleunigung resultiert. Durch diese Differentation entfällt bei der Differenzbildung ein aufgrund der Ersatzzeitkonstanten des Drehzahlreglers eines dadurch bedingten zeitlichen Versatzes der Istdrehzahl bewirkter Abstand zwischen dem Drehzahlsollwert $n_{soll}$ und dem Drehzahlistwert $n_{ist}$. Die so entstandenen Teilflächen werden schließlich wieder integriert, um die Differentiation rückgängig zu machen. Danach wird ein weiteres Mal über die entstandene Fehlfläche integriert. Die dadurch entstehende Fläche ist zusammenhängend und besitzt einen positiven Wert. Als Optimierungskriterium für die Lernregel gilt, daß die Aufschalt- bzw. Korrekturamplitude $n_a(a)$ dann genau genug gelernt ist, wenn die so ermittelte Fehlfläche F zu Null kompensiert wird. Ist dieses Optimierungskriterium erfüllt, so hat das neuronale Netz in seiner Wissensbasis, dargestellt durch Schwellwerte und Gewichte, den Verlauf einer geeigneten Amplitudenkennlinie ausreichend exakt eingespeichert. Legt man an seinen Eingang entsprechende Eingangsgrößen, so werden die dazu passenden Ausgangsgrößen zur Bestimmung der Korrekturamplitude geliefert.

Bei einer Vorrichtung, die ein Error-Backpropagation-Netz NN anstelle einer fest vorgegebenen Amplitudenkennlinie einsetzt, tritt das neuronale Netz NN an die Stelle des Speichers K. Hinzu kommt eine Logikeinheit L, welche die Differenz aus Drehzahlsollwert $n_{soll}$ und dem vom Ausgang der Achse A rückgeführten Drehzahlistwert $n_{ist}$, die in einem Subtrahierer SUB gebildet wird, verarbeitet und daraus die Fehlfläche F nach oben dargestelltem Verfahren ermittelt. Der Fehlerwert F wird an den Ausgang des Neuronalen Netzes NN geführt. Als Eingangsgrößen gelangen die Lagesollwerte $x_{soll}$, die im Differenzierer D1 abgeleiteten Drehzahlsollwerte $n_{soll}$ und die im Differenzierer D2 abgeleiteten Beschleunigungssollwerte $a_{soll}$, die davor noch ein Filter FL durchlaufen, an die Eingangsschicht des neuronalen Netzes NN. Nach erfolgreicher Lernphase liefert das neuronale Netz NN dann in der Arbeitsphase als Ausgangswerte den Wert der Korrekturamplitude $n_a$ und die Zeitkonstante T, welche über die Aufschaltlogik AL zum Impulsglied I geführt werden und dieses ansteuern.

Ein vorteilhaftes alternatives Ausführungsbeispiel ersetzt die ausgemessene und damit fest vorgegebener Amplitudenkennlinie der Reibvorsteuerung durch ein sehr einfaches neuronales Netz, ein "CEREBELLAR-MODELL-ARTICULATION-COMPUTER" kurz CMAC. Es handelt sich hierbei um ein stark vereinfachtes Modell der Signalverarbeitung, wie sie vom Kleinhirn vorgenommen wird. Der CMAC reduziert sich in der Erfindung eingesetzten Form im wesentlichen auf eine Tabelle von Amplitudenwerten, deren Größe adaptiv über mehrere Näherungsläufe hinweg optimiert wird. Das bedeutet, daß die Amplitudenkennlinie in zahlreiche Stufen bzw. Tabelleneinträge unterteilt wird, wobei sich die Stufen mit einer linearen Interpolation zwischen den Tabelleneintragen einfach glätten lassen. Man gewinnt damit eine erheblich höhere Flexibilität in der Kennlinienform und kann die Reibvorsteuerung gegebenenfalls an eine bestimmte Maschine anpassen.

Zur Bestimmung der Tabellenwerte absolviert die Werkzeugmaschine bei beiden neuronalen Netzen mehrere Drehzahl-Nulldurchgänge, z.B. bei Kreisfahrten. Der CMAC optimiert die Amplitudenwerte anhand der Differenzen zwischen den Drehzahlistwerten $n_{ist}$ und den Drehzahlsollwerten $n_{soll}$. Für diesen Näherungsprozeß sind in der Regel 10 bis 15 Iterationen ausreichend.

Da die Amplitudenkennlinien unterschiedlicher Achsen selten identisch sind, wird bei beiden Verfahren, neuronalem Error-Backpropagation-Netz und CMAC, jede Achse mit einem eigenen neuronalen Netz NN versehen. Aufgrund des einfachen Aufbaus beschränkt sich beim CMAC der zusätzliche Rechenaufwand auf einige wenige Additionen und Multiplikationen im Lagereglertakt. Das hat den Vorteil, daß nur eine geringe zusätzliche Rechenleistung verbraucht wird, die Adaption schnell vonstatten geht, das System flexibel ist und zusätzlich mit geringem Aufwand realisiert werden kann. Mit Hilfe der neuronalen Reibvorsteuerung gemäß der vorliegenden Erfindung gelingt es, die Bestimmung einer geeigneten Amplitudenkennlinie von einem Tag auf ca. eine Stunde zu reduzieren. Der Konturfehler an den Quadrantenübergängen wird mit der Reibvorsteuerung, manuell sowie neuronal, bis um den Faktor 10 kleiner als ohne Korrekturimpuls. Weiterhin werden zusätzlich lose- und torsionsbedingte Abweichungen kompensiert. Der algorithmische Aufwand und der nötige Rechenbedarf der neuronalen Reibvorsteuerung sind hierbei nur um weniges größer als bei der manuell ermittelten kennlinienbasierten Lösung. Zudem gewinnt man mit der neuronalen Reibvorsteuerung eine größere Flexibilität der Anwendung, da die Kennlinienform schneller und genauer an die realen Verhältnisse angepaßt werden kann, als dies der Mensch in der Regel zu leisten vermag.

Eine weitere Verbesserung des geschilderten Verfahrens erfolgt erfindungsgemäß dadurch, daß z.B. bei Einsatz eines neuronalen Error-Backpropagation-Netzes NN für die Logikeinheit L entschieden werden kann, ob die Lern-Regel auch in der Arbeitsphase der Maschine weiter angewendet werden soll oder nicht. Wird die Lern-Regel gesperrt, so werden die einmal gefundenen optimalen Gewichtseinstellungen und Schwelleneinstellungen in der Wissensbasis des neuronalen Netzes NN nicht mehr verändert. Wird die Lern-Regel hingegen auch in der Arbeitsphase angewendet, so wird dadurch erreicht, daß sich die neuronale Reibvorsteuerung ständig an geänderte Betriebsbedingungen adaptiert. Auf diese Weise können Verschleißerscheinungen, Temperatureinflüsse oder auch Schmiermittelveränderungen sowie eine Verstärkung der Loseeffekte im täglichen Betrieb automatisch kompensiert werden. Damit entfallen zusätzliche Wartungsarbeiten bzw. ein ständiges Neulernen der optimalen Amplitudenkennlinie.

Neben den beiden geschilderten neuronalen Verfahren Error-Backpropagation-Netzwerk und CMAC lassen sich auch andere neuronale Netzwerke zur Ermittlung einer optimalen Amplitudenkennlinie einsetzen. So lassen sich mit vorliegender Erfindung auch kombinierte Verfahren mit neuronalen Netzwerken und Regeln der Fuzzy-Logik einsetzen. Solche als Neuro-Fuzzy-Systeme bezeichneten Einheiten bieten den Vorteil, daß regelbasiertes, mit Wahrscheinlichkeiten gewichtetes Vorwissen direkt in die topologische Struktur des neuronalen Netzes eingebracht werden kann.

Solche als Fuzzy-neuronal bezeichnete Einheiten bieten zu dem den Vorteil, daß die Topologie des neuronalen Netzes durch Fuzzy-Regeln optimiert wird.

Da das dargestellte erfindungsgemäße Verfahren jeweils für jede beteiligte Maschinenachse separat angewandt wird, kann es problemlos auch zur Kompensation von Nichtlinearitäten an Maschinen mit lediglich einer Achse eingesetzt werden.

**Patentansprüche**

1. Verfahren zur numerischen Steuerung von Maschinen mit mindestens einer Achse, insbesondere von Werkzeugmaschinen und Robotern, mit folgenden Verfahrensschritten:

1.1 durch Störgrößen bedingte Nichtlinearitäten werden durch eine die Drehzahlsollwerte ($n_{soll}$) korrigierende Reibvorsteuerung kompensiert,
1.2 die Drehzahlsollwerte ($n_{soll}$) werden korrigiert, indem für jede Achse (x,y) an Quadrantenübergängen (I,II, III,IV) mit dabei an dieser Achse auftretendem Vorzeichenwechsel ein Korrekturimpuls ($n_{korr}$) auf den entsprechenden Drehzahlsollwert ($n_{soll}$) aufgeschaltet wird,
1.3 der Aufschaltzeitpunkt des Korrekturimpulses ($n_{korr}$) erfolgt im Nulldurchgang des Drehzahlsollwertes ($n_{soll}$),
1.4 bei einem Nulldurchgang des Drehzahlsollwertes ($n_{soll}$) vom negativen Bereich in den positiven Bereich wird die Aufschaltamplitude ($n_a$) addiert, bei einem Nulldurchgang des Drehzahlsollwertes ($n_{soll}$) vom positiven Bereich in den negativen Bereich wird sie subtrahiert,
1.5 der Korrekturimpuls ($n_{korr}$) besitzt eine beschleunigungsabhängige Amplitude ($n_a(a)$),
1.6 es wird die Dauer (T) des Korrekturimpulses ($n_{korr}$) sowie der Verlauf der beschleunigungsabhängigen Amplitude ($n_a(a)$) für unterschiedliche Beschleunigungswerte als Kennlinie und/oder Kennlinienfeld für die jeweilig eingesetzte Maschine vorab manuell ermittelt, wobei die Amplitudenwerte so gewählt werden, daß sie ausgehend von einer Beschleunigung von Null größer werden, in einem Bereich mittlerer Beschleunigung auf hohem Niveau verlaufen und mit weiter steigender Beschleunigung wieder kleinere Werte annehmen,
1.7 die Reibvorsteuerung wird als zusätzlicher Vorsteuerzweig in eine Achsenregelung eingebunden.

2. Verfahren nach Anspruch 1, mit folgendem weiteren Verfahrensschritt:

2.1 als Korrekturimpuls ($n_{korr}$) wird ein DT1-Impuls verwendet, dessen Abklingzeit konstant ist oder mit zunehmender Beschleunigung linear abnimmt.

3. Verfahren zur numerischen Steuerung von Maschinen mit mindestens einer Achse, insbesondere von Werkzeugmaschinen und Robotern, mit folgenden Verfahrensschritten:

3.1 durch Störgrößen bedingte Nichtlinearitäten werden durch eine die Drehzahlsollwerte ($n_{soll}$) korrigierende Reibvorsteuerung kompensiert,

3.2 die Drehzahlsollwerte ($n_{soll}$) werden korrigiert, indem für jede Achse (x,y) an Quadrantenübergängen (I,II, III,IV) mit dabei an dieser Achse auftretendem Vorzeichenwechsel ein Korrekturimpuls ($n_{korr}$) auf den entsprechenden Drehzahlsollwert ($n_{soll}$) aufgeschaltet wird,

3.3 der Korrekturimpuls ($n_{korr}$) besitzt eine beschleunigungsabhängige Amplitude ($n_a(a)$),

3.4 es wird die Dauer (T) des Korrekturimpulses ($n_{korr}$) sowie der Verlauf der beschleunigungsabhängigen Amplitude ($n_a(a)$) für unterschiedliche Beschleunigungswerte als Kennlinie und/oder Kennlinienfeld für die jeweilig eingesetzte Maschine durch ein selbstlernendes wissensbasiertes System in einer Lernphase ermittelt,

3.5 als Lernkriterium zur Durchführung der Lernphase wird die Abweichung von dem idealen erwünschten Drehzahlistwert ($n_{ideal}$) und dem tatsächlichen Drehzahlistwert ($n_{ist}$) in Form einer beim Drehzahlverlauf nach dem Nulldurchgang entstehenden Fehlfläche verwendet,

3.6 die Reibvorsteuerung wird als zusätzlicher Vorsteuerzweig in eine Achsenregelung eingebunden.

4. Verfahren nach Anspruch 3, mit folgendem weiteren Verfahrensschritt:

4.1 als Korrekturimpuls ($n_{korr}$) wird ein DT1-Impuls verwendet, dessen Abklingzeit konstant ist oder mit zunehmender Beschleunigung linear abnimmt.

5. Verfahren nach Anspuch 3 oder 4, mit folgendem weiteren Verfahrensschritt:

5.1 als selbstlernendes wissensbasiertes System wird ein Neuronales Multilayer-Perceptron-Netz (NN) mit Fehler-Rückwärts-Korrekturverfahren als Lern-Regel eingesetzt.

6. Verfahren nach Anspuch 3 oder 4, mit folgendem weiteren Verfahrensschritt:

6.1 als selbstlernendes wissensbasiertes System wird ein Neuronales Cerebellar-Modell-Articulation-Computer-Netz (CMAC) eingesetzt.

7. Verfahren nach Anspuch 3, 4, 5 oder 6, mit folgendem weiteren Verfahrensschritt:

7.1 zur Ermittlung der Fehlfläche werden erwünschter idealer Drehzahlistwert ($n_{ideal}$) und tatsächlicher Drehzahlistwert ($n_{ist}$) ab dem Aufschaltzeitpunkt erst differenziert, wobei ein konstanter Abstand zwischen dem Drehzahlsollwert ($n_{soll}$) und dem Drehzahlistwert ($n_{ist}$) entfällt, anschließend wieder integriert und zuletzt erneut über die Fehlfläche integriert.

8. Verfahren nach Anspuch 5, 6 oder 7, mit folgendem weiteren Verfahrensschritt:

8.1 die Lern-Regel zur Ermittlung des Verlaufes der Kennlinien und/oder Kennlinienfelder der beschleunigungsabhängigen Amplitude ($n_a(a)$) wird in der Arbeitsphase weiter angewendet, so daß sich die Reibvorsteuerung ständig an geänderte Betriebsbedingungen adaptiert und so etwa Verschleißerscheinungen automatisch kompensiert werden.

9. Verfahren nach einem oder mehreren der vorstehenden Ansprüche 3 bis einschließlich 7, mit folgenden weiteren Verfahrensschritten:

9.1 der Aufschaltzeitpunkt des Korrekturimpulses ($n_{korr}$) erfolgt im Nulldurchgang des Drehzahlsollwertes ($n_{soll}$),

9.2 bei einem Nulldurchgang des Drehzahlsollwertes ($n_{soll}$) vom negativen Bereich in den positiven Bereich wird die Aufschaltamplitude ($n_a$) addiert, bei einem Nulldurchgang des Drehzahlsollwertes ($n_{soll}$) vom positiven Bereich in den negativen Bereich wird sie subtrahiert.

10. Vorrichtung zur numerischen Steuerung von Maschinen mit mindestens einer Achse, insbesondere von Werkzeugmaschinen und Robotern, mit folgenden Merkmalen:

10.1 eine Reibvorsteuerung ist als zusätzlicher Vorsteuerzweig in eine Achsenregelung eingebunden,

10.2 es ist ein erstes Differenzierglied (D1) zum Differenzieren der Lagesollwerte ($X_{soll}$) und ein weiteres Differenzierglied (D2) zum Differenzieren der erhaltenen Drehzahlsollwerte ($n_{soll}$) zu Beschleunigungssollwerten ($a_{soll}$) vorgesehen,

10.3 die erhaltenen Drehzahlsollwerte ($n_{soll}$) sind einer Aufschaltlogik (AL) zur Steuerung des Aufschaltzeitpunktes im Nulldurchgang der Drehzahlsollwerte ($n_{soll}$) aufgeschaltet,

10.4 es ist eine Speichereinheit (K) zur Aufnahme einer beschleunigungsabhängigen Amplitudenkennlinie vorgesehen, die von den erhaltenen Beschleunigungssollwerten ($a_{soll}$) angesteuert wird, wobei die Amplitudenkennlinie ausgehend von einer Beschleunigung von Null größer wird, in einem Bereich mittlerer Beschleunigung auf hohem Niveau verläuft und mit weiter steigender Beschleunigung wieder kleinere Werte annimmt,

10.5 anhand der Amplitudenkennlinie (K) ermittelte Aufschaltamplituden ($n_a(a_{soll})$) sind einem Korrekturimpulsglied (I) zugeführt, von wo Drehzahlkorrekturwerte ($n_{korr}$) generiert und einem Lagereglersignal der Achsenregelung hinzuaddiert werden.

11. Vorrichtung zur numerischen Steuerung von Maschinen mit mindestens einer Achse, insbesondere von Werkzeugmaschinen und Robotern, mit folgenden Merkmalen:

11.1 eine Reibvorsteuerung ist als zusätzlicher Vorsteuerzweig in eine Achsenregelung eingebunden,

11.2 es ist ein erstes Differenzierglied (D1) zum Differenzieren der Lagesollwerte ($X_{soll}$) und ein weiteres Differenzierglied (D2) zum Differenzieren der erhaltenen Drehzahlsollwerte ($n_{soll}$) zu Beschleunigungssollwerten ($a_{soll}$) vorgesehen,

11.3 die erhaltenen Drehzahlsollwerte ($n_{soll}$) sind einer Aufschaltlogik (AL) zur Steuerung des Aufschaltzeitpunktes aufgeschaltet,

11.4 es ist ein Neuronales Netz (NN) vorgesehen, dem die Drehzahlsollwerte ($n_{soll}$) und Beschleunigungssollwerte ($a_{soll}$) eingangsseitig zugeführt sind,

11.5 an den Ausgang des Neuronalen Netzes (NN) ist ein Fehlerwert (F) geführt, der in einem logischen Schaltglied (L) aus der Differenz von Drehzahlsollwert ($n_{soll}$) und Drehzahlistwert ($n_{ist}$) gebildet ist,

11.6 vom Neuronalen Netz (NN) ist die Aufschaltlogik (AL) mit einem Amplitudenwert ($n_a$) und einer Zeitkonstante (T) versorgt,

11.7 es ist ein Korrekturimpulsglied (I) vorgesehen, welches von der Aufschaltlogik (AL) gemäß der Amplitude ($n_a$), der Zeitkonstanten (T) und anhand der Drehzahlsollwerte ($n_{soll}$) angesteuert ist und von wo Drehzahlkorrekturwerte ($n_{korr}$) generiert und einem Lagereglersignal der Achsenregelung hinzuaddiert werden.

**Claims**

1. Method for the numerical control of machines having at least one spindle, in particular of machine tools and robots, involving the following method steps:

1.1 nonlinearities due to disturbances are compensated for by a frictional precontrol system which corrects the required rotational speed values ($n_{soll}$),

1.2 the required rotational speed values ($n_{soll}$) are corrected by applying a correction pulse ($n_{korr}$) to the appropriate required rotational speed value ($n_{soll}$) for every spindle (x, y) at quadrant transits (I, II, III, IV) with a sign change occurring at said spindle at the same time,

1.3 the point in time of the application of the correction pulse ($n_{korr}$) takes place at the passage through zero of the required rotational speed value ($n_{soll}$),

1.4 when the required rotational speed value ($n_{soll}$) passes through zero from the negative region to the positive region, the application amplitude ($n_a$) is added, while when it passes through zero from the positive region to the negative region, it is subtracted,

1.5 the correction pulse ($n_{korr}$) has an acceleration-dependent amplitude ($n_a(a)$),

1.6 the duration (T) of the correction pulse ($n_{korr}$) and also the variation in the acceleration-dependent amplitude ($n_a(a)$) for different acceleration values are determined manually in advance as a characteristic curve and/or a family of characteristic curves for the particular machine used, the amplitude values being chosen so that they become larger proceeding from an acceleration of zero, proceed at high level in a region of medium acceleration and assume smaller values again with further increase in acceleration,

1.7 the frictional precontrol system is incorporated as an additional precontrol branch in a spindle regulation system.

2. Method according to Claim 1, involving the following further method step:

2.1 a DT1 pulse whose decay time is constant or decreases linearly with increasing acceleration is used as correction pulse ($n_{korr}$).

3. Method for the numerical control of machines having at least one spindle, in particular of machine tools and robots, involving the following method steps:

3.1 nonlinearities due to disturbances are compensated for by a frictional precontrol system which corrects the required rotational speed values ($n_{soll}$),

3.2 the required rotational speed values ($n_{soll}$) are corrected by applying a correction pulse

($n_{korr}$) to the corresponding required rotational speed value ($n_{soll}$) for every spindle (x, y) at quadrant transits (I, II, III, IV) with a sign change occurring at said spindle at the same time,

3.3 the correction pulse ($n_{korr}$) has an acceleration-dependent amplitude ($n_a(a)$),

3.4 the duration (T) of the correction pulse ($n_{korr}$) and also the pattern of the acceleration-dependent amplitude ($n_a(a)$) for different acceleration values is determined as a characteristic curve and/or a family of characteristic curves for the particular machine used by a autodidactic knowledge-based system in a learning phase,

3.5 the learning criterion used to carry out the learning phase is the deviation from the ideal, desired actual rotational speed value ($n_{ideal}$) and the actual rotational speed value ($n_{ist}$) in the form of an error area occurring in the rotational speed characteristic after passage through zero,

3.6 the frictional precontrol system is incorporated in a spindle regulation system as an additional precontrol branch.

4. Method according to Claim 3 involving the following further method step:

4.1 a DT1 pulse whose decay time is constant or decreases linearly with increasing acceleration is used as correction pulse ($n_{korr}$).

5. Method according to Claim 3 or 4, involving the following further method step:

5.1 a neural multilayer perceptron network (NN) involving an error back-correction method as learning rule is used as autodidactic knowledge-based system.

6. Method according to Claim 3 or 4, involving the following further method step:

6.1 a neural cerebellar model articulation computer (CMAC) network is used as autodidactic knowledge-based system.

7. Method according to Claim 3, 4, 5 or 6, involving the following further method step:

7.1 to determine the error area, desired ideal actual rotational speed value ($n_{ideal}$) and real actual rotational speed value ($n_{ist}$) are differentiated only from the point in time of application, a constant distance between the required rotational speed value ($n_{soll}$) and the actual rotational speed value ($n_{ist}$) being eliminated, then integrated again and finally integrated again over the error area.

8. Method according to Claim 5, 6 or 7, involving the following further method step:

8.1 the learning rule for determining the variation in the characteristic curves and/or families of characteristic curves for the acceleration-dependent amplitude ($n_a(a)$) is further used in the working phase so that the frictional precontrol system constantly adapts to changed operating conditions and any wear phenomena are thereby automatically compensated for.

9. Method according to one or more of the preceding claims, 3 to 7 inclusive, involving the following further method steps:

9.1 the point in time of the application of the correction pulse ($n_{korr}$) occurs in the passage through zero of the required rotational speed value ($n_{soll}$),

9.2 when the required rotational speed value ($n_{soll}$) passes through zero from the negative region into the positive region, the application amplitude ($n_a$) is added and when the required rotational speed value ($n_{soll}$) passes through zero from the positive region into the negative region, it is subtracted.

10. Device for the numerical control of machines having at least one spindle, in particular of machine tools and robots, having the following features:

10.1 a frictional precontrol system is incorporated as an additional precontrol branch into a spindle regulation system,

10.2 there is provided a first differentiating element (D1) for differentiating the required position values ($X_{soll}$) and a further differentiating element (D2) for differentiating the required rotational speed values ($n_{soll}$) obtained to form required acceleration values ($a_{soll}$),

10.3 the required rotational speed values ($n_{soll}$) obtained are applied to an application logic (AL) to control the point in time of application in the passage through zero of the required rotational speed values ($n_{soll}$),

10.4 there is provided a memory unit (K) for receiving an acceleration-dependent amplitude characteristic curve, which memory unit is activated by the required acceleration values ($a_{soll}$) obtained, the amplitude characteristic curves becoming greater proceeding from an acceleration of zero, running at high level in a region of medium acceleration and assuming smaller values again with further increase in acceleration,

10.5 application amplitudes ($n_a(a_{soll})$) determined from the amplitude characteristic curve (K) are fed to a correction pulse element (I) from which point rotational speed correction values ($n_{korr}$) are generated and are added to a position regulation signal of the spindle regulation system.

11. Device for the numerical control of machines having at least one spindle, in particular of machine tools and robots, having the following features:

11.1 a frictional precontrol system is incorporated into a spindle regulation system as an additional precontrol branch,

11.2 there is provided a first differentiating element (D1) for differentiating the required position values ($X_{soll}$) and a further differentiating element (D2) for differentiating the required rotational speed values ($n_{soll}$) obtained to form required acceleration values ($a_{soll}$),

11.3 the required rotational speed values ($n_{soll}$) obtained are applied to an application logic (AL) to control the point in time of application,

11.4 there is provided a neural network (NN) to whose input the required rotational speed values ($n_{soll}$) and required acceleration values ($a_{soll}$) are fed,

11.5 there is conveyed to the output of the neural network (NN) an error value (F) which is formed in a logic switching element (L) from the difference between required rotational speed value ($n_{soll}$) and actual rotational speed value ($n_{ist}$),

11.6 the application logic (AL) is supplied with an amplitude value ($n_a$) and a time constant (T) by the neural network (NN),

11.7 there is provided a correction pulse element (I) which is activated by the application logic (AL) in accordance with the amplitude ($n_a$) and the time constant (T) and on the basis of the required rotational speed values ($n_{soll}$) and from which point rotational speed corrected values ($n_{korr}$) are generated and are added to a position regulation signal of the spindle regulation system.

**Revendications**

1. Procédé de commande numérique de machines ayant au moins un arbre, notamment de machines-outils et de robots, comportant les étapes suivantes :

1.1 on compense des non-linéarités dues à des grandeurs perturbatrices au moyen d'une commande préalable de frottement corrigeant les valeurs de consigne de vitesse de rotation ($n_{soll}$),

1.2 on corrige les valeurs de consigne de vitesse de rotation (nsoll) en appliquant pour chaque arbre (x, y) une impulsion de correction (nkorr) à la valeur de consigne de vitesse correspondante (nsoll) lors des transitions entre quadrants (I, II, III, IV) avec changement de signe simultané sur cet arbre,

1.3 l'instant d'application de l'impulsion de correction (nkorr) correspond au passage par zéro de la valeur de consigne de vitesse ($n_{soll}$),

1.4 lors d'un passage par zéro de la valeur de consigne de vitesse (nsoll) du domaine négatif au domaine positif, on additionne l'amplitude à appliquer ($n_a$) ; lors d'un passage par zéro de la valeur de consigne de vitesse ($n_{soll}$) du domaine positif au domaine négatif, on soustrait l'amplitude à appliquer ($n_a$),

1.5 l'impulsion de correction ($n_{korr}$) a une amplitude ($n_a(a)$) dépendante de l'accélération,

1.6 on détermine à l'avance manuellement pour la machine effectivement utilisée la durée (T) de l'impulsion de correction (nkorr) ainsi que la courbe de l'amplitude ($n_a(a)$), dépendante de l'accélération, pour différentes valeurs d'accélération sous forme de courbe caractéristique et/ou de réseau de courbes caractéristiques, les valeurs d'amplitude étant choisies d'abord croissantes en partant d'une accélération nulle, puis d'un niveau élevé dans une plage d'accélération moyenne et enfin reprenant de plus petites valeurs pour une accélération encore plus grande,

1.7 on intègre la commande préalable de frottement comme branche de commande préalable supplémentaire dans une commande d'arbres.

2. Procédé selon la revendication 1, comportant l'autre étape suivante :

2.1 on utilise comme impulsion de correction ($n_{korr}$) une impulsion DT1 dont le temps de descente est constant ou diminue de manière linéaire lorsque l'accélération augmente.

3. Procédé destiné à la commande numérique de machines ayant au moins un arbre, notamment de machines-outils et de robots, comportant les étapes suivantes :

3.1 on compense des non-linéarités dues à des grandeurs perturbatrices au moyen d'une commande préalable de frottement corrigeant les valeurs de consigne de vitesse de rotation ($n_{soll}$),

3.2 on corrige les valeurs de consigne de vites-

se de rotation ($n_{soll}$) en appliquant pour chaque arbre (x, y) une impulsion de correction ($n_{korr}$) à la valeur de consigne de vitesse de rotation correspondante ($n_{soll}$) lors des transitions entre quadrants (I, II, III, IV) avec changement de signe simultané sur cet arbre,

3.3 l'impulsion de correction ($n_{korr}$) a une amplitude (na(a)) dépendante de l'accélération,

3.4 on détermine au moyen d'un système auto-adaptatif avec base de connaissances, au cours d'une phase d'apprentissage et pour la machine effectivement utilisée, la durée (T) de l'impulsion de correction (nkorr) ainsi que la courbe de l'amplitude ($n_a$(a)), dépendante de l'accélération, pour différentes valeurs d'accélération sous forme de courbe caractéristique et/ou de réseau de courbes caractéristiques,

3.5 comme critère d'apprentissage pour l'exécution de la phase d'apprentissage, on utilise l'écart entre la valeur réelle de vitesse idéale de rotation (nideal) souhaitée et la valeur réelle de vitesse effective de rotation (nist) sous la forme d'une surface d'erreur formée par la courbe de vitesse après le passage par zéro,

3.6 on intègre la commande préalable de frottement comme branche de commande préalable supplémentaire dans une commande d'arbres.

4. Procédé selon la revendication 3, comportant l'autre étape suivante :

4.1 on utilise comme impulsion de correction ($n_{korr}$) une impulsion DT1 dont le temps de descente est constant ou diminue de manière linéaire lorsque l'accélération augmente.

5. Procédé selon la revendication 3 ou 4, comportant l'autre étape suivante :

5.1 on utilise comme système auto-adaptatif avec base de connaissances un réseau neuronal multicouche de type Perceptron (NN) avec un procédé de correction à rétropropagation d'erreur comme règle d'apprentissage.

6. Procédé selon la revendication 3 ou 4, comportant l'autre étape suivante :

6.1 on utilise comme système auto-adaptatif avec base de connaissances un réseau neuronal de type Cerebellar-Modell-Articulation-Computer (CMAC).

7. Procédé selon la revendication 3, 4, 5 ou 6, comportant l'autre étape suivante :

7.1 pour déterminer la surface d'erreur, on calcule d'abord les dérivées de la valeur réelle de vitesse idéale de rotation (nideal) souhaitée et de la valeur réelle de la vitesse effective de rotation (nist) à partir de l'instant d'application de l'impulsion, un écart constant entre la valeur de consigne de la vitesse de rotation (nsoll) et la valeur réelle de la vitesse de rotation (nist) étant ainsi éliminé, puis on intègre de nouveau et enfin on intègre encore sur la surface d'erreur.

8. Procédé selon la revendication 5, 6 ou 7, comportant l'autre étape suivante :

8.1 on continue à utiliser pendant la phase de travail la règle d'apprentissage destinée à la détermination de la variation des courbes caractéristiques et/ou des réseaux de courbes caractéristiques de l'amplitude ($n_a$(a)) dépendante de l'accélération, de sorte que la commande préalable de frottement s'adapte constamment à des conditions d'exploitation variables et que par exemple des phénomènes d'usure peuvent ainsi être compensés automatiquement.

9. Procédé selon une ou plusieurs des revendications 3 à 7, comportant les autres étapes suivantes :

9.1 l'instant d'application de l'impulsion de correction (nkorr) correspond au passage par zéro de la valeur de consigne de la vitesse de rotation ($n_{soll}$),

9.2 lors d'un passage par zéro de la valeur de consigne de la vitesse de rotation ($n_{soll}$) du domaine négatif au domaine positif, on additionne l'amplitude à appliquer ($n_a$) ; lors d'un passage par zéro de la valeur de consigne de la vitesse de rotation (nsoll) du domaine positif au domaine négatif, on soustrait l'amplitude à appliquer ($n_a$).

10. Dispositif destiné à la commande numérique de machines ayant au moins un arbre, notamment de machines-outils et de robots, comportant les caractéristiques suivantes :

10.1 une commande préalable de frottement est intégrée comme branche de commande préalable supplémentaire dans une commande d'arbres,

10.2 il est prévu un premier élément différentiateur (D1) pour calculer les dérivées des valeurs de consigne de position ($x_{soll}$) et un autre élément différentiateur (D2) pour calculer les dérivées des valeurs de consigne de la vitesse de rotation ($n_{soll}$) obtenues et former ainsi des valeurs de consigne d'accélération ($a_{soll}$),

10.3 les valeurs de consigne de la vitesse de

rotation ($n_{soll}$) obtenues sont appliquées à une logique d'application (AL) pour la commande de l'instant d'application de l'impulsion lors du passage par zéro des valeurs de consigne de vitesse de rotation (nsoll),

10.4 il est prévu une mémoire (K) qui est destinée à recevoir une courbe caractéristique d'amplitude dépendante de l'accélération et qui est contrôlée par les valeurs de consigne d'accélération (asoll) obtenues, la courbe caractéristique d'amplitude étant croissante en partant d'une accélération nulle, puis d'un niveau élevé dans une plage d'accélération moyenne et enfin reprenant de plus petites valeurs pour une accélération encore plus grande,

10.5 des amplitudes à appliquer ($n_a(a_{soll})$) déterminées à l'aide de la courbe caractéristique d'amplitude (K) sont envoyées à un élément d'impulsion de correction (I) à partir duquel des valeurs de correction de vitesse ($n_{korr}$) sont générées et sont additionnées à un signal régulateur de position de la commande d'arbres.

11. Dispositif de commande numérique de machines ayant au moins un arbre, notamment de machines-outils et de robots, comportant les caractéristiques suivantes :

11.1 une commande préalable de frottement est intégrée comme branche de commande préalable supplémentaire dans une commande d'arbres,

11.2 il est prévu un premier élément différentiateur (D1) pour calculer les dérivées des valeurs de consigne de position ($x_{soll}$) et un autre élément différentiateur (D2) pour calculer les dérivées des valeurs de consigne de la vitesse ($n_{soll}$) de rotation obtenues et former ainsi des valeurs de consigne d'accélération ($a_{soll}$),

11.3 les valeurs de consigne de la vitesse de rotation ($n_{soll}$) obtenues sont appliquées à une logique d'application (AL) pour la commande de l'instant d'application de l'impulsion,

11.4 il est prévu un réseau neuronal (NN) auquel les valeurs de consigne de la vitesse de rotation ($n_{soll}$) et les valeurs de consigne d'accélération ($a_{soll}$) sont envoyées en entrée,

11.5 à la sortie du réseau neuronal (NN) est envoyée une valeur d'erreur (F) qui est formée dans un circuit logique (L) à partir de la différence entre la valeur de consigne de vitesse de rotation ($n_{soll}$) et la valeur réelle de la vitesse de rotation ($n_{ist}$),

11.6 la logique d'application (AL) reçoit du réseau neuronal (NN) une valeur d'amplitude (na) et une constante de temps (T),

11.7 il est prévu un élément d'impulsion de correction (I) qui est contrôlé par la logique d'application (AL) en fonction de l'amplitude (na) et de la constante de temps (T) et à l'aide des valeurs de consigne de la vitesse de rotation ($n_{soll}$) et à partir duquel des valeurs de correction de la vitesse de rotation ($n_{korr}$) sont générées et sont additionnées à un signal régulateur de position de la commande d'arbres.

EP 0 754 317 B1

$m_r$

$k_r$

$n_{ist}$

$n$

$n_{soll}$

$n_{ist}$

$t$

**FIG 1**

FIG 2

FIG 3

$n_{korr}(a,t)$

$n_a(a)$

$$n_{korr}(a,t) = n_a(a) \cdot e^{-t/T}$$

$a = konst.$

$t$

**FIG 4**

$n_a(a)$

$t = konst.$

$|a|$

**FIG 5**

FIG 6

FIG 7

FIG 8